(19) Europäisches Patentamt
European Patent Office
Office européen des brevets

(11) **EP 2 808 977 B1**

(12) **EUROPÄISCHE PATENTSCHRIFT**

(45) Veröffentlichungstag und Bekanntmachung des Hinweises auf die Patenterteilung:
**23.06.2021  Patentblatt 2021/25**

(51) Int Cl.:
*H02J 13/00* *(2006.01)*    *H02J 3/14* *(2006.01)*
*G01D 4/00* *(2006.01)*    *G06Q 50/06* *(2012.01)*

(21) Anmeldenummer: **14169919.9**

(22) Anmeldetag: **26.05.2014**

(54) **Anordnung zur Stabilisierung von Elektrizitätsnetzen**

Assembly for stabilising electricity grids

Système de stabilisation de réseaux d'électricité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2013  DE 102013008870**

(43) Veröffentlichungstag der Anmeldung:
**03.12.2014  Patentblatt 2014/49**

(73) Patentinhaber: **Träbing, Ernst**
**34596 Bad Zwesten (DE)**

(72) Erfinder: **Träbing, Ernst**
**34596 Bad Zwesten (DE)**

(74) Vertreter: **Stamer, Jan**
**PATENTANWALTSKANZLEI STAMER**
**Postfach 2604**
**35536 Wetzlar (DE)**

(56) Entgegenhaltungen:
WO-A2-2013/017896    US-A1- 2010 076 835
US-A1- 2010 218 006    US-A1- 2011 270 453
US-A1- 2012 179 631

• **None**

**Beschreibung**

Die Erfindung betrifft eine Anordnung zur Elektrizitätsnetz-Datenumformung und -Stabilisierung durch Netz-Nutzer als Netzbezieher und/oder Netz-Einspeiser an einem Bezugs-Nutzer- und/oder Einspeiser-Netzknoten ohne Erfordernis einer zentralen oder regionalen Netzsteuerung. Eingeschlossen ist ein neuer physikalischer Flexibilitätsmaßstab, dessen Skalierungsmöglichkeiten, die Messtechnik und deren praktische Anwendungen.

Die leitungsgebundene **Versorgung der Verbraucher mit Elektrizität** erfolgt überwiegend durch Energienetze (abgestuft nach Spannung und Betreiber) aus rationell großen, zentralen, unterschiedlich schnell steuerbaren Energieerzeugungsanlagen. Zur Glättung der Netzbelastungen und Anpassung des Verbrauches an die überwiegend träge Produktionsweise der Wärmekraftwerke wird über zentrale Schaltungen (z.B. Netzleitstellen mit Rundsteueranlagen für Speicherheizungen) in die dezentrale Nutzung eingegriffen. (EP 1.339.155 B1)

Aus WO 2013/017896 A2 ist ein Verfahren zur Steuerung einer Vielzahl von regelbaren Lasten als Verbraucher in einem elektrischen Netz bekannt. Der Stromverbrauch der Lasten wird in Abhängigkeit von Frequenzschwankungen des elektrischen Netzes in Bereichen außerhalb gewisser Toleranzgrenzen gesteuert, wobei die Auswahl der einzelnen Lasten von ihren individuellen Ein- und Ausschaltzyklen im Normalbetrieb abhängt. Vorzugsweise werden Lasten ohne oder mit sehr kleinen regulären Betriebszyklen oder solche mit sehr langen Betriebszyklen ausgewählt. Die Frequenzschwankungen können u.a. lokal gemessen und zur Steuerung der Einschaltzeiten der Lasten mit dem Ziel einer Stabilisierung der Netzfrequenz eingesetzt werden. Die Messung der Frequenzschwankungen kann entsprechend vorgegebener Taktzeiten wiederholt und die Steuerung der Lasten daran angepasst werden.

Aus US 2012/0179631 A1 ist ein Verfahren zur Verwaltung von steuerbaren Lasten als Verbraucher in einem elektrischen Netz bekannt, bei dem die Netz-Frequenzen innerhalb einer bestimmten Bandbreite der Sollfrequenz und der Stromverbrauch der individuellen Lasten über einen vorgegebenen Zeitraum gemessen werden. Der Stromverbrauch während einer Zeit niedriger Netzfrequenzen führt zu einem Verlustwert und der Stromverbrauch während einer Zeit hoher Netzfrequenzen führt zu einem Guthabenwert. Die Verlust- und Guthaben-Bestände können bei der Nutzer-"Stromrechnung" berücksichtigt werden oder zu einer Änderung des "Stromtarifs" mit Auswirkung auf die "Stromrechnung" genutzt werden.

Weiterer Stand der Technik ist aus US 2011/270453 A1, US 2010/076835 A1 und US 2010/218006 A1 bekannt.

Außerdem wird die individuelle Leistungs-Inanspruchnahme durch sicherheits-technische Maßnahmen, wie Anschluss-Schmelz-Sicherungen, bei allen Nutzern begrenzt. Zusätzlich wird bei größeren Verbrauchern die individuelle Leistungs-Inanspruchnahme durch ständige Leistungsbegrenzung geglättet und als Anreiz zu deren Einhaltung werden bei Überschreitung Leistungsaufpreise fällig.

Bei **gleichmäßiger Vollauslastung der Energienetze ("Bandnutzung")** können die Netzkosten auf die maximal mögliche Energie-Transportmenge verteilt und je Kilowattstunde minimiert werden. Davon ausgehend gilt die völlig gleichmäßige Einspeisungs- und Entnahme-Leistung zwischen konkreten Netznutzern als besonders vorteilhaft. Die Einhaltung der Bandnutzung wird mit Maßnahmen des Stetigkeitsmaßstabes überwacht und bei den Netznutzungskosten als Anreiz mit Rabatten begünstigt.

Die **Abrechnung der Netznutzung,** einschließlich des Aufwandes für die Stabilhaltung des Netzzustandes, erfolgt als staatlich überwachter Zuschlag und Preisbestandteil der Bezugspreise je EnergiemengenEinheit. Diese Preisbestandteile steigen mit der Unstetigkeit der Netznutzung sowie der Zahl der genutzten Spannungsebenen an. Sie fallen mit steigender Energiemenge je Einspeiser und Verbraucher. Die Unterschiede der Lastverläufe infolge des individuellen Verhaltens werden nur bei Großnutzern gemessen, ansonsten mit pauschalierten "synthetischen Lastprofilen" der verschiedenen Nutzergruppen in den Kalkulationen berücksichtigt. Die "Bandnutzung" bzw. "Stetigkeit" als "Grundlast" gilt für die Netzstabilisierung als vorteilhaft bis unerlässlich. Als Anreiz dafür wird die Höhe der Netznutzungskosten teilweise stark reduziert oder die Berechnung entfällt völlig.

Die Messungen zur Energieabrechnung erfolgen unauffällig (z.B. in bedingt für Einzelpersonen einsehbaren Zählerschränken) und für die Abrechnung sind Jahreszeiträume mit Abschlagsabbuchungen üblich.

Der **Wert der Energie-Mengeneinheiten** (z.B. Cent/kWh) ist bei Börsen-Preisen umso geringer, je unsteter die Einspeisung zugesichert wird und je geringer die Einspeiseleistung ist. Dem wird durch anders motivierte Zielsetzungen (z.B. Klimaschutz) mit politischen garantierten Mindestpreisen (EEG, KWKG usw.) stark fördernd entgegen gewirkt. Seither steigen die Anteile unsteter Einspeisung und führen zunehmend zu netztechnischen Problemen. Die Erzeugungs-Anlagen werden zunehmend "abgeregelt", also die Energie vernichtet. Sogar bei Neuplanung von Netzen wird davon ausgegangen, auch künftig bis zu 5% der Leistung abzuregeln.

Für unprivilegierte Verbraucher bewirkt die Umlage der Förderaufschläge erhebliche Zusatzbelastungen, mit weiter steigender Tendenz.

Zur Problemlösung wird für die technische Weiterentwicklung des Energiemarktdesign an weiträumig verzweigten **Mess-, Steuerungs- und Regelungseinrichtungen** gearbeitet. Stets mit der Erfordernis des häufigen oder kontinuierlichen Datenaustausches zwischen dem individuellen Netznutzer und/oder dem Netzbetreiber und/oder dem durchleitenden Stromlieferant bzw. Händler.

So wird bereits mit "intelligenten Stromzählern" (vgl. WIKIPEDIA-Eintrag vom 24.5.13) argumentiert. Gemäß damaligen Medien wird den besonders interessierten Verbrauchern per Fernübertragung und Internet die Möglichkeit geboten, am Folgetag rückblickend den eigenen Lastverlauf mit dem im öffentlichen Netz zu vergleichen. Außerdem werden zusätzliche Informationswege und stärker differenzierte Messungen vorgeschlagen, mit deren Ergebnissen Stromhändler oder Energieversorger über zusätzliche Steuerungsinstrumente in die Anlagen der einzelnen Netznutzer eingreifen können. (US2011/0231028A1) Die PV- und WindkraftAnlagen sind oder werden überwiegend mit Fern- oder Maximalwert-Abschaltungsmöglichkeiten ausgestattet.

Inzwischen wird auch für "Kapazitätsmärkte" Umlagefinanzierung vorgeschlagen. Als Anreiz soll der Betreiber für den Bau von fossil betriebenen Reserve-Erzeugungs-Kapazitäten zur unerlässlichen Bereithaltung eine garantierte Renditesicherung erhalten.

Der **Aufwand der Netzstabilisierung** wird nicht den jeweiligen Verursachern der Sollwert-Abweichung zugeordnet, sondern gemeinsam mit den sonstigen Netznutzungskosten als Preisbestandteil der Mengeneinheit der Energie überwälzend abgerechnet und den Stromabnehmern belastet, und zwar **völlig unabhängig davon, welche Teile der Energiemenge auf der Seite der Einspeisung oder Entnahme die Netzstabilität verbessern und welche sie verschlechtern, auch ohne räumliche und zeitliche Differenzierung. Das be- und verhindert die Flexibilisierung des Nutzerverhaltens bei Erzeugung und Verbrauch zur Verbesserung der Netzstabilität.**

Einst wurden bei Aufbau der Elektrizitätsversorgung mit trägen Wärmekraftwerken die **Vorteile der "Bandnutzung"** mit technischer Argumentation begründet. Unzutreffend besteht das Vorurteil fort, die gleichmäßige Netzauslastung und Stabilität bedürfe der Energiezu- und -abführung aus **möglichst stetig betriebenen Erzeugungs- und Verbrauchsanlagen von möglichst konkret definierten Vertragspartnern.** Dies technische Vorurteil der Fachwelt verursacht als Anreiz die rechtliche und finanzielle Begünstigung der "Bandnutzung", aber wirkt inzwischen bei der Nutzung nachhaltiger Energiearten und der Minderung des Schadstoffausstoßes als **technisches Vorurteil gegen die Flexibilisierung.** Die (Fehl-)Anreize haben sogar die Nebenwirkung, zur Erreichung der Begünstigungen den Leistungsverlauf zu "glätten", indem die "Täler des Energiebedarfes" durch **Energieverschwendung** aufgefüllt werden, bis hin zum sommerlichen Betrieb von Frostschutzheizungen bei Garagenzufahrten.

Die Stabilität des Netzes liegt im **Interesse aller Netznutzer.** Sowohl Atom- und Kohlekraft als auch Sonne- und Windkraft haben typische Lastgänge, sind aber gleichermaßen unflexibel. Die aus übergeordneten Sachzwängen der Risikobegrenzung und Schadstoffvermeidung zunehmende Nutzung der **fluktuierenden Energie** führt zu starken Schwankungen und Lastspitzen im Netz. Das erfordert die **Flexibilisierung aller Nutzungen des gesamten Netzsystems,** sowohl bei allen Verbrauchern, als auch bei sonstigen Erzeugern.

Stattdessen wird die **Glättung des individuellen Verbrauchs** und die **Stetigkeit der Einspeisung durch technische Vorgaben begünstigt** und mit finanziellen Anreizen zugleich die Unflexibilität gefördert.

Es fehlen einfache, schnell realisierbare, technische Möglichkeiten für flächendeckende, individuelle **Anreize zur Verbesserung durch Flexibilisierung.** Den Netznutzern werden **keine Informationen** geboten, ob ihre aktuelle, individuelle Netznutzung die allgemeine Netzstabilität verbessert oder verschlechtert.

Die über **"intelligente Stromzähler"** angestrebten Veränderungen erleichtern zentrale Funktionen, z.B. Fernsteuerung bis zur Abschaltung säumiger Kunden. Die dem Kunden gebotene Informationsmöglichkeit zum Vergleich von individuellem und allgemeinem Lastverlauf reicht nicht zur **flexiblen Reaktion** in Echtzeit. Die ist jedoch bei den zunehmenden Anteilen fluktuierender Energie aus Wind und Sonne zur sofortigen Korrektur erforderlich. Hinzu kommt die räumliche schnelle Differenzierung durch Windböen oder Wolken bei PV-Anlagen, die bei herkömmlichen Netzstrukturen kaum oder nicht beherrschbar ist.

Zugleich besteht der Techniktrend fort, den individuellen Energieverbrauch aus dem Bewusstsein zu verdrängen. Dazu gehört der Zentralisierungstrend mit Fernablesung, zur automatischen, monatlichen Abschlagsabbuchung und der einmaligen geringen Schlussabrechnungsbuchung, auch in Verbindung mit der im Zählerschrank eingeschlossenen Verbrauchsanzeige.

**Es fehlt Technik,** die Menge, den Verlauf, die Kosten und die **individuellen Verbesserungsmöglichkeiten der Energienutzung zur Netzstabilisierung stets augenfällig ins Bewusstsein zu bringen** und die **Motivation zur Automatisierung der individuellen Effizienzsteigerung zu verbessern.**

Die angestrebte und mit Einführung der "intelligenten Stromzähler" flächendeckend begonnene, kontinuierliche Fernablesung der individuellen Leistungsverläufe aus Wohnungen kann den **Datenschutz der Privatsphäre gefährden.** Denn die Datenauswertung - kann je nach Datendichte - nicht nur Informationen über die Anwesenheit der Bewohner und die genutzten Geräte ermöglichen, sondern sogar (z.B. über die mit Hell-Dunkel-Schwankungen verbundenen Leistungssignale) die genutzten Fernsehprogramme ermitteln. In Verbindung mit der Analyse von deren politischer Orientierung kann dies zur Interessen- und Gesinnungs-Überwachung der Wohnungsnutzer eingesetzt werden. Aber auf der Hannovermesse 2013 wurde aus den technischen Fachgremien des VDEW als Erfolg verkündet, man habe erreicht, für die Erweiterung der Fernablesungen eine Anpassung der Datenschutzgesetze mit Hilfe eines Missbrauchsverbotes vermeiden zu können.

**Der Erfindung lag daher die Aufgabe zugrunde,** eine Anordnung zur Stabilisierung des Elektrizitätsnetzes anzugeben,

- bei dem die Netznutzer (Einspeiser und/oder Entnehmer der elektrischen Energie) dezentral und unabhängig voneinander ihren Beitrag leisten,
- das technische Voraussetzungen für Anreize zur Einführung eines neuen Systems im Rahmen des bestehenden Systems bietet und
- bei dem ein verbesserter Datenschutz zum Individual-Verhalten der Netz-Nutzer und Netz-Einspeiser gewährleistet ist.

Diese Aufgabe wird bei einer Anordnung der eingangs genannten Art durch die Ansprüche 1 und 2 gelöst. Vorteilhafte Weiterbildungen ergeben sich aus der nachfolgenden Beschreibung.

Der physikalische Flexibilitätsmaßstab dient der Ablösung des bisherigen Stetigkeitsmaßstabes. Die Stetigkeit wurde bisher als Qualitätsmaßstab verstanden, da sie dem Bestreben dient, das Produktionsoptimum der überwiegend fossil betriebener Dampftechnik zu erreichen.

Der Flexibilitätsmaßstab ermöglicht die Chancengleichheit im Wettbewerb aller Netznutzer zur technischen und wirtschaftlichen Effizienzsteigerung. Sowohl durch die dezentrale Einbeziehung aller Verbraucher, als auch der unflexiblen Erzeugungsbereiche der stetigen (z.B. fossile Wärmekraft), der fluktuierenden Erzeugung (z.B. Sonne- und Windkraft) und der flexiblen Erzeugung (z.B. Wasser, Biogas usw.).

Die nachfolgend unter Ziffer 1, 2 und 2.1 - 2.9 herausgestellten Merkmale beschreiben die bisher bekannten Maßnahmen zur Stabilisierung der Elektrizitätsnetze.

1. Dezentrale technische Leistungsbegrenzungen als Sicherheitseinrichtungen, wie Schmelzsicherung,
2. Lokale, regionale bis überregionale technisch-organisatorische Abstimmung zwischen Erzeugung und Verbrauch mittels Glättung von Einspeisung und Bezug.

2.1 technische Glättung der innerhalb der Wirtschaftseinheit verursachten Netzbelastung durch Leistungsbegrenzung,

2.2 durch stetige Einspeisung und Bezug konkreter Netznutzer,

2.3 durch Verknüpfung unterschiedlicher Netznutzer über Stundenfahrpläne,

2.4 zentrale überregionale und regionale Laststeuerung durch Netzleitstellen zur Minderung oder Erhöhung der Einspeisung oder des Bezuges, z.B. Pumpspeicherkraftwerke, Speicherheizungen, Abschaltung von PV- oder Windkraftanlagen,

2.5 Schwarmtechnologie zur zentralen, netzbetreiber-unabhängigen Steuerung dezentraler Umwandler wie Klein-KWK-Anlagen,

2.6 dezentrale Beeinflussung des Nutzerverhaltens durch "intelligente Stromzähler", Anregung des Eigenverbrauches einschließlich Elektrizitätsspeicherung,

2.7 Zentrale bis regionale, variable Preisbildung über zusätzliche Informationsnetze und "intelligente Stromzähler", wobei in Abhängigkeit von der Netzstabilität unter Berücksichtigung von Prognosen die Preise pro Energiemengeneinheit (z.B. €/kWh) variieren und evtl. sogar in die Steuerung der Umwandler (Erzeuger, Verbraucher) der Wirtschaftseinheit der Nutzer steuernd und/oder regelnd eingegriffen wird,

2.8 Bereitstellung von Daten der Energiemengen zur Abrechnung, zu gleichbleibend vereinbarten Preisen, in denen die Kosten der Netznutzung enthalten sind, mitsamt des Kostenanteils des Regelungsaufwandes der Netzbetreiber,

2.9 Beeinflussung der technischen Netznutzung über wirtschaftliche Anreize zu Ziffer 2.1, 2.2, 2.3, 2.4, 2.5, 2.6 und 2.7.

Die erfindungsgemäß eingesetzten, z.T. an sich bekannten Bauteile und Baugruppen, sowie Verfahrensschritte zur weiteren Erläuterung der erfindungsgemäßen Anordnung nach Anspruch 1 und 2 werden nachfolgend angegeben:

3. Bauteile und Verfahren zur dezentralen Stabilisierung über nutzerbezogene Kurzzeitmessungen und Bewertungen in Abhängigkeit von aktuellen **Netzzustandsdaten (27)** wie Spannung und Frequenz, bestehend aus

3.0.1 den **Elektrizitätsnetzen (1, 2),** den **Netzknoten (3, 4)** der **"Netzbewertung + Umwandler-Steuerung" (5)** mit den Elementen **"Netzzustandsdaten-Messung mit Taktgeber" (6),**
**Daten-Chip (7),**
**Prognose-Eingabe (8),**
**"Einstellung Umwandler" (9),**
**Netzzustandsbewertungslogik (10)** und

**Umwandler-Steuereinheit (14),**

3.0.2 den **Subsystemen (12,13)**

mit den Elementen

**"Netzbewertung + Umwandler-Steuerung" (14),**

**Schaltern (15, 16, 17),**

**Umwandler (18, 19, 20),**

3.0.3 **"Nutzungsbewertungs- und Abrechnungseinheit"(21),**

mit den Elementen

**Stromzähler (22),**

**"Mengen- und Werteinheiten-Ermittlung" (23),**

**Abrechnungs-Summenspeicher (24),**

3.0.4 der **Signalausgabe (25),**

3.0.5 den **Signalleitungen (26),**

3.0.6 Aus den **Netzzustandsdaten (27)** wird bei **Sollwert-Abweichung (28)** ermittelt, ob dem Netz momentan Energie zugeführt oder entnommen werden sollte, damit die **Netzzustandsdaten (27)** verbessert werden. Zur Bewertung des Netzzustandes werden **Stabilitäts-Beiwerte (29)** als Kenngröße der **Sollwert-Abweichung (28)** ermittelt.

Die **Sollwerte (31), Toleranzgrenzen (32)** und evtl. **Sollbereiche (33)** werden zweckmäßig standardisiert zu **"standardisierten Sollwerten", "standardisierten Toleranzgrenzen" und "standardisierten Sollwert-Abweichungen" (34).**

Bei der Standardisierung wird vorzugsweise der **Sollwert = 0,** die **"untere Toleranzgrenze" (35)** = -1 und die **"obere Toleranzgrenze" (36)** = +1 angesetzt. Zwischenwerte werden vorzugsweise proportional umgerechnet. Es können jedoch auch progressive Verläufe (z.B. mit Sollbereichen, durch potentiellen, logarithmischen oder mit frei gewähltem Verlauf) als zweckmäßig eingesetzt werden. Unterschiedliche Arten der **Netzzustandsdaten (27)** (z.B. Spannung, Frequenz), können durch Standardisierung zu gemeinsamen **"standardisierten Sollwert-Abweichungen" (34)** verknüpft werden. Alternativ können andere Regelungen gewählt werden, z.B. Berücksichtigung der Art der **Netznutzungsdaten (27),** die unabhängig vom Vorzeichen die größte **"standardisierte Sollwert-Abweichung" (34)** - aus Spannung oder Frequenz - aufweist.

Die **Stabilitäts-Beiwerte (29)** können durch **Wertlinien (37)** vorteilhaft programmiert werden, wenn die **Wertlinien (37)** von der Proportionalität zur **"standardisierten Sollwert-Abweichung" (34)** abweichen, vorzugsweise durch progressiven Verlauf.

Mit den **Stabilitäts-Beiwerten (29)** werden in Verbindung mit der **Kurzzeit-Energiemenge (38)** unter Berücksichtigung von Bezug oder Einspeisung die **Kurzzeit-Werteinheiten (39)** mit der Dimension **Werteinheiten We** ermittelt.

Bei **Sollwert-Abweichung (28)** bzw. Abweichung von den **Sollbereichen (33)** variieren die Energieinhalte (z.B. kWh) pro **Werteinheit We,** bei Einspeisung und Bezug jeweils um den gleichen Anteil. Die Werteinheit We verknüpft die Energiemenge mit dem jeweils gleichzeitigen Beitrag zur Verbesserung oder Verschlechterung der Netzstabilität am jeweiligen Anschlusspunkt. (In Anlehnung an übliche Dezimalklassifizierung kann jedoch auch das Verhältnis von Wh zu We , kWh zu kWe und MWh zu MWe usw. gewählt werden.)

Die unterschiedlichen Energieinhalte pro **Werteinheit We** (z.B. kWh/We) ergeben während des **Abrechnungszeitraumes** durch die Summierung der **Kurzzeit-Werteinheiten (39)** bei der **Abrechnung** nach **Werteinheiten We** Anreize zur individuellen Verbesserung der allgemeinen **Netzzustandsdaten (27).**

3.0.7 Der **Stabilitäts-Beiwert (29) SB** dient in Abhängigkeit von Bezug oder Einspeisung unter vorgegebenen Kriterien der Zu- bzw. Abschaltung oder der Leistungssteigerung bzw. -minderung der einzelnen **Umwander (18, 19, 20),** je nachdem, durch welche Veränderung, die **Netzzustandsdaten (27) verbessert** oder **verschlechtert** werden.

3.0.8 Das Verfahren ist für die Gesamtheit der Netznutzer mengen- und kostenneutral, soweit es nicht abweichend programmiert wird. Bei Einhaltung der **Sollwerte (31)** ist SB = 1 und beträgt die technische Energiemenge 1 kWh pro **Werteinheit We.**

Aber mit zunehmender **Sollwert-Abweichung (28)** der **Netzzustandsdaten (27)** variieren der Energieinhalt/Werteinheit (kWh/We), bei Einspeisung und Bezug im gleichen Umfang, gleicht sich also zu jedem Zeitpunkt aus.

Die Mengen der **Kurzzeit-Werteinheiten (39)** für Bezug und Einspeisung aller Netznutzer stimmen - bei Einhaltung der **Sollwerte (31)** der **Netzzustandsdaten (27)** - mit der Menge der Energie-Einheiten (z.B. kWh) weitestgehend überein.

Die **Kurzzeit-Werteinheiten (39)** werden während des **Abrechnungszeitraumes (43)** summiert. Durch Kostenvor-bzw. - nachteile in €/kWh ergibt sich über die Abrechnung ein Anreiz zur kontinuierlichen Verbesserung der **Netz-**

zustandsdaten (27).

**3.1** Die **"Netzbewertung + Umwandler-Steuerungen" (5, 14)** bestehen aus:

**3.1.1** der **"Netzzustandsdaten-Messung mit Taktgeber" (6).**
Die Takte bemessen die dazwischen liegenden kurzen Zeitabschnitte der **Taktzeit (41)** der **Kurzzeitmessung (42).**
Die **Taktzeit (41)** kann nach unterschiedlichen Kriterien oder deren Kombination bemessen werden:

a) starre kurze Zeitdauer, z.B. gewählt zwischen 10 Sekunden und 10 Minuten.
b) Die **Taktzeit (41)** ist umso kürzer, je größer die Abweichung des **Stabilitäts-Beiwertes (29)** vom **Sollbereich (33)** ist.
c) Zufallsgenerator im Bereich der gewählten möglichen **Taktzeiten (41).**
d) Kombination verschiedener Bemessungen.

Die Takte werden an die **Netzzustandsbewertungslogik (10)** und an die **"Mengen- und Werteinheiten-Ermittlung" (23)** gegeben. Zugleich erfolgt die Messung der **Netzzustandsdaten (27),** insbesondere Spannung und Frequenz, und deren Weitergabe an die **Netzzustandsbewertungslogik (10).**

**3.1.2** In den **Daten-Chip (7)** werden die für die Netznutzung zur Ermittlung des **Stabilitäts-Beiwertes (29)** geltenden Kriterien (z.B. **Wertlinie (37))** eingegeben und an die **Netzzustandsbewertungslogik (10)** weiter gegeben.
Die Eingabe kann durch eine gemeinsame Chipkarte der beteiligten **Wirtschaftseinheiten (48)** erfolgen, z.B. mit den Daten des Betreibers des öffentlichen Netzes, des Stromlieferanten und des Stromkunden.
Sie kann z.B. enthalten, die Vertragspartner, die **Sollwerte (31), Toleranzgrenzen (32)** und die **Wertlinie (37)** zur Beurteilung der **Netzzustandsdaten (27),** Vorgaben zu den Takten und der Dauer der **Abrechnungszeiträume (43).**

**3.1.3** In der **Prognose-Eingabe (8)** werden interne (z.B. Urlaube) und externe (z.B. Wettervorhersage) Prognosedaten zur Verarbeitung in der **Umwandler-Steuereinheit (11)** hinterlegt.

**3.1.4** In der **"Einstellung Umwandler" (9)** werden die zur Umwandler-Steuerung geltenden Kriterien (z.B Stabilitäts-Beiwert-Schaltschwellen für Mindest-Einschaltzeiten) für die Verarbeitung in der **"Umwandler-Steuereinheit" (11)** hinterlegt.
Die Hinterlegung der Daten 3.1.2 bis 3.1.4 kann zumindest teilweise automatisch erfolgen, z.B. Wetterprognosen.

**3.1.5** In der **Netzzustands-Bewertungslogik (10)** erfolgt die Ermittlung des **Stabilitäts-Beiwertes (29)** unter Verwendung der verschiedenen bereitgestellten Daten.
Der **Stabiltäts-Beiwert (29)** wird an die **Umwandler-Steuereinheit (11),** an die **"Netzzustandsdaten-Messung mit Taktgeber" (6)** und an die **"Mengen- und Werteinheiten-Ermittlung" (23)** weiter gegeben.

**3.1.6** In der **Umwandler-Steuereinheit (11)** wird die Steuerung der **Schalter (15, 16)** der in dem **Subsystem (12)** angeschlossenen **Umwandler (18, 19)** - unter der Einbeziehung, ob Bezug oder Einspeisung vorliegt - berechnet und betätigt.

**3.2** In dem **Subsystemen (12)** sind die **Umwandler (18, 19)** an die **"Netzbewertung + Umwandler-Steuerung" (5)** und in **Subsystem (13)** der **Umwandler (20)** an die **"Netzbewertung + Umwandler-Steuerung" (14)** angeschlossen.

**3.3** Die **"Nutzungsbewertungs- und Abrechnungseinheit" (21)** besteht aus dem **Stromzähler (22),** der **"Mengen- und Werteinheiten-Ermittlung" (23)** und dem **Abrechnungs-Summenspeicher (24).**

**3.3.1** der **Stromzähler (22)** erfasst kontinuierlich die Energiemenge getrennt nach Bezug und Einspeisung und die Werte werden (z.B. als Impulse) an die **"Mengen- und Werteinheiten-Ermittlung" (23)** gegeben.
Sofern wegen Preisgleichheit nicht zwischen Einspeisung und Bezug unterschieden werden muss, kann mit "rückwärts laufenden Zählern" die Wertung wie mit positiven und negativen Vorzeichen erreicht werden. Es können übliche, mechanische oder elektronische **Stromzähler (22)** verwendet werden.

**3.3.2** In der **"Mengen- und Werteinheiten-Ermittlung" (23)** werden die **Kurzzeit-Energiemengen (38)** zu den durch die **"Netzzustandsdaten-Messung mit -Taktgeber" (6)** vorgegebenen Zeitpunkten addiert.
Sie werden mit den für Einspeisung und Bezug von der **Netzzustands-Bewertungslogik (10)** übernommenen **Stabilitäts-Beiwerten (29)** zu **Kurzzeit-Werteinheiten (39)** bewertet und an den **Abrechnungs-Summenspeicher (24)** weiter gegeben, ebenso die **Kurzzeit-Energiemengen (38).**

3.3.3 Im **Abrechnung-Summen-Speicher (24)** werden die **Kurzzeit-Energiemengen (38)** und die **Kurzzeit-Wert-Einheiten (39)** kontinuierlich über längere Zeiträume, z.B. Monate, maximal für die Dauer des **Abrechnungszeitraumes (43)** aufaddiert und jeweils für die **Abrechnung** gesichert.

Das Verhältnis der Summen der Energiemengen (kWh) zu Werteinheiten (We) während des Abrechnungszeitraumes ist Kenngröße und Maßstab der durchschnittlichen Flexibilität und bei Neutralität = 1.

**3.4 Signalausgabe (25)**

Die Daten für die **Signalausgaben (25)** können im vorprogrammierten Umfang übernommenen werden aus der **"Nutzungsbewertungs- und Abrechnungseinheit" (21)**,

der **"Netzbewertungs- und Umwandler-Steuerung" (5, 14)** und den **Subsystemen (12, 13).**

Die Daten können an beliebiger Stelle angezeigt und motivierend präsentiert werden.

**3.5** Die **Signalleitungen (26)** sind als Pfeile dargestellt, können alle Übertragungstechniken umfassen. Sie können sowohl der Übertragung von digitalen Daten, als auch für einfache elektrische Schalterbetätigung dienen.

**4.** Verfahren nach Ziffer 3, wobei innerhalb des **Abrechnungszeitraumes** extern vorgegebene Preisänderung in die Funktionen der **"Netzbewertung + Umwandler-Steuerung" (5,14)** einbezogen werden.

**5. Verfahren nach Ziffer 3,** wobei es von zentraler Stelle, z.B. öffentlicher Netzbetreiber, inaktiv geschaltet werden kann, wenn besondere, definierte Bedingungen erfüllt sind.

**6. Verfahren nach Ziffer 3,** wobei unter bestimmten Bedingungen allgemeine Rundsteuersignale des öffentlichen Netzbetreibers unter besonderen, definierten Bedingungen in ihrer lokalen Wirkung aufgehoben werden können.

**7. Verfahren nach Ziffer 3**

zur Verbesserung des **Datenschutzes,** indem

a) die Datenfernablesung auf einen oder wenige Datensätze je **Abrechnungszeitraum** begrenzt wird,

b) die Datenfernablesung jeden Datensatzes im **Abrechnungs-Summenspeicher (24)** registriert und mit einer Wertgutschrift verbunden wird.

**8. Verfahren nach Ziffer 3.4** zur **Signalausgabe (25)** können enthalten

a) den aktuellen **Stabilitäts-Beiwert (29),**

b) Darstellung des aktuellen Realpreises (z.B. in Ct/kWh) ermittelt aus allgemeinen Energiepreisen mit Einbeziehung des aktuellen Einflusses des **Stabilitäts-Beiwertes (29).**

c) wie vor mit Trend- und/oder Prognoseanzeige,

d) Bezugs- und Einspeiseverlauf,

e) Bezugs- und Einspeiseverlauf im Vergleich mit vorangegangenen Verläufen,

f) aktuellen Bezug oder Einspeisung bewertet mit Preisen und hochgerechnet auf Jahresbetrag,

g) Blink- und/oder akustische Signale ab einem voreingestellten **Stabilitäts-Beiwert (29)**

### Lösungsansatz

Das aktuelle Nutzerverhalten (Menge und Bezug oder Einspeisung) wird **dezentral in kurzen Zeitabständen** erfasst, bezüglich der **Art und des Ausmaßes der Beeinflussung** der gleichzeitigen allgemeinen **Netzzustandsdaten (27)** (z.B. Frequenz und/oder Spannung) bewertet und als **Werteinheiten We** für den **Abrechnungszeitraum (43)** aufaddiert.

Bei der Abrechnungs-Dimension der Elektrizitätsmenge wird die Einheit Kilowattstunde kWh durch die **Werteinheit We** ersetzt. Eine We enthält bei momentaner Einhaltung der **Sollwerte (31)** der **Netzzustandsdaten (27)** (Frequenz und Spannung) eine kWh. Jedoch wird bei **Sollwert-Abweichung (28)** der **Netzzustandsdaten (27)** die Energiemenge pro We durch ein **Bonus-Malus-System** verändert, **je nachdem ob aktueller Bezug oder Einspeisung die Netzzustandsdaten (27) verbessern oder verschlechtern.**

Die Differenzierung der Bewertung jeder **Kurzzeitmessung (42)** gibt über die Summierung zur Abrechnung Anreize zur kontinuierlichen, dezentralen Verbesserung der **Netzzustandsdaten (27)** und damit der allgemeinen Netzstabilität.

### Verfahrensschritte

- Die aktuellen **Netzzustandsdaten (27)** werden lokal über **Kurzzeitmessungen (42)** erfasst. Aus den **Kurzzeit-Energiemengen (38)** und der Bewertung der zeitgleich erfassten **Netzzustandsdaten (27)** wird für jede **Kurzzeitmessung (42)** ein **Stabilitäts-Beiwert (29)** zwischen +1 und -1 ermittelt.
- Die individuelle Be- oder Entlastung der Netzstabilität wird über die **technische Energiemengen (kWh)** als **Kurzzeit-Energiemenge (38)** KEM mit dem **Stabilitäts-Beiwert (29) SB** bewertet und als Wert der Kurzzeit-Netznutzung in **Kurzzeit-Werteinheiten (39) WKN** in **Werteinheiten We** erfasst. Der Wert der **Kurzzeit-Werteinheiten (39)** beträgt: **WKN = KEM * (1+SB)** mit Dimension We. (Stattdessen kann in Verbindung mit einer Formelumstellung und anderen Standardisierungen mit einem Stabilitätsfaktor gerechnet werden, wenn der Sollwert auf 1 und die Toleranzgrenzen auf 0 bzw. 2 festgelegt werden.)
- Für die Dauer der **Abrechnungszeiträume (43)** erfolgt die **WKN**-Summenbildung der **Werte der Kurzzeit-Netznutzung (39)** innerhalb der **Wirtschaftseinheit (48) WE** und wird nur als **Abrechnungszeit-Wertsumme (49)** an die Vertragspartner der Netznutzung (z.B.: Netzbetreiber, Stromlieferer) weiter gegeben.
- Die aktuellen **Stabilitäts-Beiwerte (29) SB** werden zur Steuerung und Regelung der **Umwandler (18, 19, 20)** (Erzeuger und/oder Verbraucher) eingesetzt. Entsprechend den für Schaltungen vorbestimmten Kriterien zur Umwandler-Steuerung wird dezentral, kontinuierlich, automatisch die Verbesserung der **Netzzustandsdaten (27)** bewirkt.
- Die **allgemeinverständliche Aufbereitung** der Auswertung von **Netzzustandsdaten (27)**, **Stabilitäts-Beiwert (29) SB** und **Kurzzeitmessung (42)** erfolgt mit sofortiger gestaffelter, optischer und/oder akustischer **Signalweitergabe** an die **Nutzer** innerhalb der **Wirtschaftseinheit (48)**.
- Die **Taktzeit (41)** als Dauer der **Kurzzeit-Messungen (42)** wird entsprechend der aktuellen Gefährdung der Netzstabilität variiert.
- Die **Einzel-Daten** der Erfassung und Auswertung der **Kurzzeitmessungen(42)** verbleiben innerhalb der **Wirtschaftseinheit (48)** (z.B. Wohnung).

### Vorteile

- Die **Einführung der Anwendung** kann - auf freiwilliger Basis schrittweise beginnend - **in wenigen Jahren vollständig vollzogen werden.**
- Die **Umstellung der Technik** kann effizient erfolgen, da die vorhandenen **Stromzähler (22)** und **Umwandler (18, 19, 20)** (Erzeuger und/oder Verbraucher) nur durch **Zusatzgeräte** ergänzt werden. Für neue **Umwandler (18, 19, 20)** sind **integrierte Geräte** möglich.
- Die **Umstellung der Abrechnung** von kWh auf **Werteinheit We** mit variierenden Energiemengen wirkt bei Erzeugern und Verbrauchern wie **variierende Energiepreise.**
- Obwohl diese Differenzierungen in der Summe weitgehend mengen- und kostenneutral sind, wirkt die Differenzierung zwischen Verbesserung oder Verschlechterung der Netzstabilität über individuelle Kostenent- oder -belastung als kontinuierlicher, marktwirtschaftlich motivierender Anreiz zur individuellen Verbesserung der Netzstabilität und des Verständnisses.
- Die **Signalaufbereitung und Weitergabe** innerhalb der **Wirtschaftseinheit (48)** lässt die aktuelle Situation und ihre Entwicklungstendenz ins Blickfeld rücken, z.B. durch Einblendung einer "Kostenuhr" ins Fernsehbild der Betroffenen. Das **fördert die Motivation** und ermöglicht unmittelbares, individuelles Eingreifen über die automatischen Verbesserungs-Steuerungen hinaus.
- Durch den Verbleib der Detaildaten der Kurzzeitnutzungen im Bereich der **Wirtschaftseinheit (48),** z.B. einer Wohnung, wird der **Datenmissbrauch** - **insbesondere der Privatsphäre** - **verhindert.**
- Die **verursachergerechte Kostenzuordnung** der **Verbesserung oder Verschlechterung** der **Netzzustandsdaten (27)** ersetzt die undifferenzierten, pauschalierten Belastungen.
- Anstelle der bisherigen Lösungsansätze über Energiespeicherung, die bei Elektrizität mit Batterien besonders aufwendig ist, tritt die weiter zunehmende, automatisierte **Flexibilisierung durch dezentrale Lastverlagerung.** Bei den Energieverbrauchern vom Haushaltskühlschrank bis zur Metallschmelze, bei den Energieerzeugern von der KWK-Technik bis zur Wasserkraftnutzung (mit bedarfsorientiert schwankenden Abflussmengen). Die **Flexibilisierung mindert zentrale Aufwendungen zur Netzstabilisierung und die damit verbundenen Regelungs- und Investitionskosten.**
- Die dezentralen Beiträge verbessern die **Netzzustandsdaten (27)** in **allen Bereichen der Elektrizitätsnetze (1, 2).** Das mindert die bei bisheriger zentraler Steuerung typischen **Spannungsabweichungen, insbesondere die -unterschreitungen am Netzende.** Auch die bei unzureichender Netzstärke entstehenden **kleinräumigen, lokalen oder regionalen Belastungsspitzen** werden gemindert oder beseitigt.
- Zugleich werden die Folgen der **ungeeigneten Netzstruktur** und der **Verzögerungen des Netzumbaues** ent-

**schärft.** So kann z.B. die zentrale PV-Abschaltung lokal aufgehoben werden, wenn am Netzknoten infolge Eigenverbrauch keine Einspeisung erfolgt.

- Minderung der **Aufwendungen der planwirtschaftlichen Umlagesysteme** (z.B. EEG, KWKG), indem Betreiber von Anlagen der Erneuerbaren Energie - z.B. Wasserkraft oder Biogas - bei der **Ausschöpfung der Flexibilisierungsmöglichkeiten** mit **Beiträgen der technischen Effizienz** und durch **Verlassen des Umlagesystems** (EEG, KWKG) wirtschaftlich erfolgreicher sein können.

Für die Standortwahl der neu zu errichtenden **Photovoltaik-Anlagen kommt eine Umorientierung,** nämlich von der Strommengen-Maximierung zu möglichst bedarfsgerechter Erzeugung, vom Einsatz auf Süddächern zu ost- und westorientierten Dächern und Fassaden. Das **entschärft die zeitweiligen Überlastungsprobleme der**

**Mittagsspitzen.**

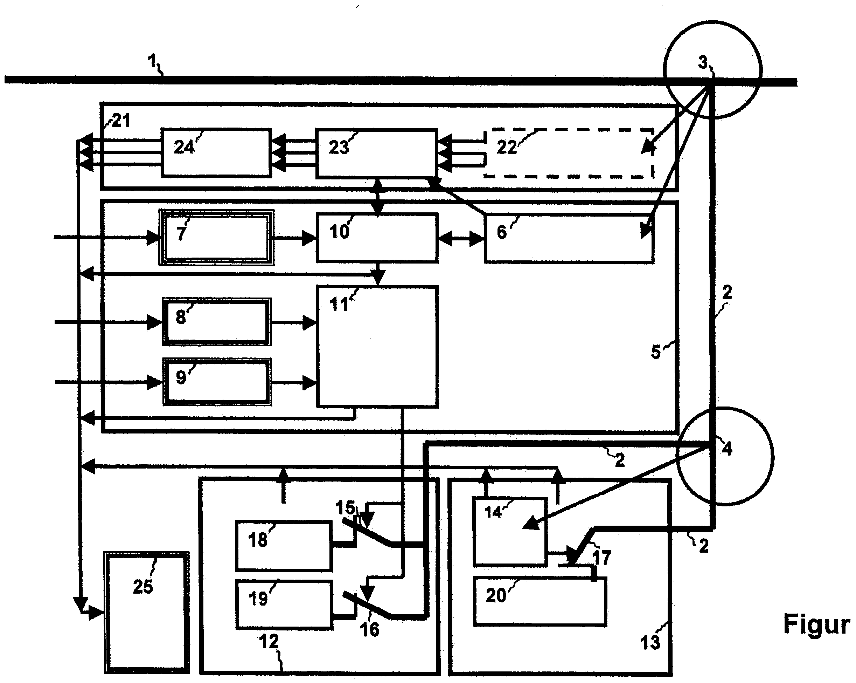

Ein Ausführungsbeispiel der erfindungsgemäßen Anordnung ist in der Figur schematisch dargestellt und wird nachfolgend beschrieben.

Das **Elektrizitätsnetz (1)** sei ein Netz eines öffentlichen Betreibers und über den **Netzknoten (3)** mit dem **Elektrizitätsnetz (2)** einer anderen **Wirtschaftseinheit (48)** verknüpft. Das **Elektrizitätsnetz (2)** ist am **Netzknoten (4)** zum Anschluss zweier **Subsysteme (12, 13)** verzweigt. Als **Subsysteme (12, 13)** werden die Bereiche bezeichnet, in denen sich **Umwander (18, 19, 20)** befinden.

Am **Netzknoten (3)** befindet sich innerhalb der Bauteil-Gruppe **"Nutzungsbewertungs- und Abrechnungseinheit" (21)** der **Stromzähler (22)** mit gestrichelter Rahmung, da er allgemein vorhanden ist.

Die Bauteilgruppe **"Netzbewertung + Umwandler-Steuerung" (5)** dient sowohl der Steuerung der **Umwandler (18, 19)** im **Subsystem (12),** als auch der **"Nutzungsbewertungs- und Abrechnungseinheit" (21).** Der Datenbereitstellung dienen der **Daten-Chip (7),** die **"Einstellung Umwandler" (9)** und die **Prognose-Eingabe (8).**

Die **"Netzbewertung** + Umwandler-Steuerung" (14)** dient lediglich der Steuerung des **Umwandlers (20)** im **Subsystem (13)** und hat keine Funktion für die **"Nutzungsbewertungs- und Abrechnungseinheit" (21),** kann aber ansonsten die gleichen Merkmale enthalten.

**Steuerungsbeispiele**

Die **Umwandler-Steuereinheit (11)** in der **"Netzbewertung + Umwandlersteuerung" (5)** kann auch Verfahrensschritte zur Aufhebung eines zentral ausgegebenen Rundsteuersignals übernehmen, z.B. die Aufhebung einer zentralen Abschaltung von PV-Anlagen, wenn dies im **Daten-Chip (7)** und in der **"Einstellung Umwandler" (9)** für den **Umwandler (19)** vorprogrammiert ist. Die dezentrale Art der **"Netzbewertung + Umwandler-Steuerung" (14)** kann besonders rationell ausgestaltet sein, wenn sie für den dezentralen Einsatz bestimmter Umwandlerarten ausgelegt ist. So kann, wenn der **Umwandler (20)** eine Kühltruhe darstellt, die **"Netzbewertung und Umwandler-Steuerung" (14)** als Zwischenstecker - vergleichbar üblichen Stromverbrauchsanzeigen - konstruiert sein, der um einen Temperaturfühler mit dünnem Draht die Temperatur in der Kühltruhe so überwacht und steuert, dass bei sehr niedrigem **Stabilitäts-Beiwert (29)** eine besonders tiefe Temperatur zur Energiespeicherung und gleichzeitigen Verbesserung der Netzstabilität führt.

Die **"Nutzungsbewertungs- und Abrechnungseinheit" (21)**

ermittelt in **"Mengen- und Werteinheiten-Ermittlung" (23)** die **Kurzzeit-Werteinheiten (39)** und gibt sie getrennt nach Einspeisung und Bezug zur Summierung an den **Abrechnungs-Summenspeicher (24).** Die Trennung ist für die Abrechnung erforderlich, da meist für Einspeisung oder Bezug unterschiedliche Preise gelten. Die Begrenzung der Datenweitergabe auf die Summen-Weitergabe dient dem Datenschutz.

**Erläuterung zu Sollwert-Abweichung (28), Wertlinie (37) und Stabilitäts-Beiwert (29)**

**Angenommene Daten:**

| Physikalisch | Spannung in V (Volt) | Frequenz in Hz (Herz) |
|---|---|---|
| Sollwerte (31) | 230 | 50 |

(fortgesetzt)

| Physikalisch | Spannung in V (Volt) | | Frequenz in Hz (Herz) | |
|---|---|---|---|---|
| Toleranzgrenzen (32) | 210 | 250 | 48 | 50,2 |
| Netzzustandsdaten (27) | | 245 | 49,5 | |
| Sollwert-Abweichung (28) | | +15 | 0,5 | |

| Standardisierte Werte | Spannung | | Frequenz | |
|---|---|---|---|---|
| Sollwert (31) | 0 | | 0 | |
| Untere Toleranzgr. (35) | -1 | | -1 | |
| Obere Toleranzgr. (36) | | +1 | | +1 |
| Sollbereiche (33) | - 0,1 bis +0,1 | | - 0,1 bis +0,1 | |

### Standardisierte Sollwert-Abweichung (34 aus 28) der Netzzustandsdaten (27),

proportional umgerechnet aus den physikalischen Werten

| | Spannung | Frequenz |
|---|---|---|
| +15/(250-230) = +15/20 = | + 0,75 | |
| -0,5/(50-48)= -0,5/2 = | | -0,25 |

### Die Stabilitäts-Beiwerte (29)

Sie sollen der Netzstabilisierung dienen. Wenn sie gegenläufige Tendenz - wie in diesem Beispiel - haben, ist vorzugsweise die größere oder aus beiden eine Kombination mit zweckmäßig definierter Berechnungsform, anzuwenden.

Wenn die **Stabilitäts-Beiwerte (29)** in der Größe der standardisierten **Sollwert-Abweichung (34 aus 28)** - jedoch als Faktor mit umgekehrtem Vorzeichen - angesetzt werden, wirken sie korrigierend. Die **Wertlinie (37)** wird gebildet aus den Größen aller möglichen **Stabilitäts-Beiwerte (29)** einer definierten Berechnungsform.

Die **Wertlinie (37)** ist proportional, also geradlinig, wenn sie aus der standardisierten **Sollwert-Abweichung (34 aus 28)** mit Vorzeichen-Umkehr ermittelt wird.

Die **Stabilitäts-Beiwerte (29)** können auch über die **Toleranzgrenzen (35, 36)** hinaus zur Anwendung kommen.

Bei **proportionaler Wertlinie (37)** kann es jedoch im Bereich des **Sollwertes (31)** durch häufigen Vorzeichenwechsel in den Steuerungen zu unerwünschten Schalthäufungen (Takten) kommen.

Es ist zweckmäßig, beidseitig des **Sollwertes (31)** einen **Sollbereich (33)** mit der **Wertlinie (37)** auf 0 auszuweisen, z.B. mit 1/10 des Abstandes zwischen **Sollwert (31)** und **Toleranzgrenzen (32, 35, 36)**. Die Schalthäufung kann auch mit steigender Progression der **Wertlinie (37)** gemindert werden, z.B. wenn angesetzt wird **Stabilitäts-Beiwert (29)** = $-X*A^3$, wobei A die standardisierte **Sollwert-Abweichung (28)** ist. Das verstärkt in der Nähe der **Toleranzgrenzen (35, 36)** den Anreiz der Netzstabilisierung

### Anwendung des Stabilitäts-Beiwertes SB (29)

### für die Ermittlung der Werteinheiten We

Der **Stabilitäts-Beiwert SB (29)** wird zur Ermittlung der **Werteinheiten** We genutzt.

Die Menge des Energieinhaltes der **Werteinheiten** We wird in der Abrechnung gegenüber dem Zahlenwert der technischen Energiemenge (kWh) verändert.

Das ist ein verursachergerechter Anreiz zur Netzstabilisierung mit jeder **Kurzzeit-Energiemenge (38)** KEM. Die Umrechnung der **Kurzzeit-Energiemenge (38)** KEM in kWh zu **Kurzzeit-Werteinheiten (39)** WKN beträgt:

$$WKN = KEM *(1 + SB)$$

mit der Dimension We.

**Beispiele:**

A) Bisherige Methode

Es wird der Energiepreis vereinfachend für Verbraucher- und Erzeugerseite, bzw. Bezug und Einspeisung mit 0,20 €/kWh angenommen.
Das ergibt bei einer **Kurzzeit-Energiemenge (38) KEM** von 5 kWh eine Abrechnungssumme von 5 kWh*0,20 €/kWh = 1,00 €.

B) Für die Methode der Elektrizitätsnetz-Stabilisierung werden drei Varianten gezeigt:

Dabei wird der Preis je Werteinheit (€/We) in allen drei Varianten stets so angesetzt, wie er sich ergibt, wenn das Netz stabil ist, also keine Sollwert-Abweichung (28) hat und der **Stabilitäts-Beiwert (29) SB** = 0,0 beträgt.
B1) Netz ist genau im Sollwert (31), **Stabilitäts-Beiwert (29) SB** = 0,0 Bei WKN = KEM *(1 + SB) ist WE = 5 * (1+0) = 5 We; 5 We * 0,20 €/We = 1,00 €; also übereinstimmend mit A) Bisherige Methode.
Weder Erzeuger noch Verbraucher haben einen Anreiz zur Verhaltensänderung.

B2) Die Netzzustandsdaten (27) haben einen **Stabilitäts-Beiwert (29) SB** = - 0,35.

Die Menge der Werteinheiten beträgt dann
WKN = KEM * (1+SB) = 5 * (1-0,35) = 3,25 We. Das ergibt als Abrechnungssumme 3,25 We*0,20 €/We = 0,65 €. Die Energiekosten sind um 35% geringer als beim Sollwert-Durchschnittswert.
Das mobilisiert die Verbraucher zur erhöhten Nutzung und lässt auf der Erzeugerseite die Produktion drosseln.
Beides dient der Verbesserung der **Netzzustandsdaten (27).**

B3) Die Netzzustandsdaten (27) ergeben einen **Stabilitäts-Beiwert (29) SB** = +0,35.

Die Menge der Werteinheiten beträgt dann
WKN = KEM * (1+SB) = 5 * (1+0,35) = 6,75 We. Das ergibt als Abrechnungssumme 6,75 We*0,20 €/We = 1,35 €. Die momentanen Energiekosten sind 35% höher als beim Sollwert bzw. Durchschnittswert.
Das motiviert Verbraucher zur Sparsamkeit und lässt auf der Erzeugerseite die flexible Produktion hochfahren.
Beides dient der Verbesserung der Netzzustandsdaten (27).

**Zusammenfassendes Ergebnis:**

Von der **Bemessungsmethode der Elektrizitätsnetz-Stabilisierung** gehen stets Anreize zur freiwilligen Verbesserung der **Netzzustandsdaten (27)** aus, also zur Verbesserung der Netzstabiltät.

**Patentansprüche**

1. Anordnung zur Elektrizitätsnetz-Datenumformung und -Stabilisierung durch Netz-Nutzer und/oder Netz-Einspeiser an einem Bezugs-Nutzer- und/oder Einspeiser-Netzknoten ohne Erfordernis einer zentralen oder regionalen Netzsteuerung, wobei

   a) am jeweiligen Netzknoten (3, 4) Messgeräte zur Erfassung der aktuellen Netzzustandsdaten (27) Spannung oder Spannung und Frequenz angeordnet sind,
   b) als Messgerät ein Gerät zur "Netzzustandsdaten-Messung mit Taktgeber" (6) zur Ausgabe der Netzzustandsdaten (27) für eine getaktete Ermittlung eines Stabilitäts-Beiwertes (29) als Kenngröße einer Sollwert-Abweichung (28) vorhanden ist,
   c) den Messgeräten eine Netzzustandsbewertungslogik (10) zur Ermittlung von Sollwert-Abweichungen (28) der Netzzustandsdaten (27) von einem vorgegebenen Sollwert (31) und zur Bewertung der Sollwert-Abweichungen (28) in Form des Stabilitäts-Beiwertes (29) nachgeordnet ist,
   d) einem zentralen Netzknoten (3) einer lokalen Wirtschaftseinheit (48) ein Stromzähler (22) zur Ermittlung der bezogenen oder eingespeisten Strommenge nachgeordnet ist,
   e) dem Stromzähler (22) ein Rechner zur "Mengen- und Werteinheiten-Ermittlung" (23) und zur Gewichtung der ermittelten Strommenge mit dem getakteten Stabilitäts-Beiwert (29) zur Ermittlung von Kurzzeit-Werteinheiten (39) WKN nachgeordnet ist,

f) ein Abrechnungs-Summenspeicher (24) zur Summierung und Speicherung der Kurzzeit-Werteinheiten (39) WKN als Abrechnungszeit-Wertsumme (49) nachgeordnet ist, **dadurch gekennzeichnet, dass**

g) eine Umwandler-Steuereinheit (11) als Steuereinheit zum Betrieb von lokalen Umwandlern (18, 19, 20) an Stromverbraucher-Geräten für Bezug und/oder Stromeinspeise-Anlagen für Einspeisung in Abhängigkeit von dem Stabilitäts-Beiwert (29)vorhanden ist.

## Claims

1. Arrangement for electricity grid data conversion and stabilization by grid users and/or grid infeed devices at a reference user and/or infeed device grid node without requiring central or regional grid control, wherein

a) measurement devices for detecting the current grid state data (27) of voltage or voltage and frequency are arranged at the respective grid node (3, 4),

b) a device for "grid state data measurement with clock" (6) for outputting the grid state data (27) for clocked determination of a stability coefficient (29) as characteristic variable of a setpoint value deviation (28) is present as measurement device,

c) a grid state evaluation logic circuit (10) for determining setpoint value deviations (28) of the grid state data (27) from a prescribed setpoint value (31) and for evaluating the setpoint value deviations (28) in the form of the stability coefficient (29) is arranged downstream of the measurement devices,

d) an electric meter (22) for determining the amount of electricity drawn or fed in is arranged downstream of a central grid node (3) of a local economic unit (48),

e) a computer for "amount and unit of value determination" (23) and for weighting the determined amount of electricity using the clocked stability coefficient (29) for determining short-term units of value (39) WKN is arranged downstream of the electric meter (22),

f) a billing sum memory (24) for summing and storing the short-term units of value (39) WKN as a billing time value sum (49) is arranged downstream, **characterized in that**

g) a converter control unit (11) is present as a control unit for operating local converters (18, 19, 20) at power consumer devices for reference and/or electricity infeed installations for infeed depending on the stability coefficient (29).

2. Arrangement for electricity grid data conversion and stabilization by grid users and/or grid infeed devices at a reference user and/or infeed device grid node without requiring central or regional grid control, **characterized in that**

a) measurement devices for detecting the current grid state data (27) of voltage and frequency are arranged at the respective grid node (3, 4),

b) a device for "grid state data measurement with clock" (6) for outputting the grid state data (27) for clocked determination of a stability coefficient (29) as characteristic variable of a setpoint value deviation (28) is present as measurement device,

c) a grid state evaluation logic circuit (10) for determining setpoint value deviations (28) of the grid state data (27) from a prescribed setpoint value (31) and for evaluating the setpoint value deviations (28) in the form of the stability coefficient (29) is arranged downstream of the measurement devices,

d) an electric meter (22) for determining the amount of electricity drawn or fed in is arranged downstream of a central grid node (3) of a local economic unit (48),

e) a computer for "amount and unit of value determination" (23) and for weighting the determined amount of electricity using the clocked stability coefficient (29) for determining short-term units of value (39) WKN is arranged downstream of the electric meter (22) and

f) a billing sum memory (24) for summing and storing the short-term units of value (39) WKN as a billing time value sum (49) is arranged downstream.

## Revendications

1. Agencement permettant de convertir et de stabiliser des données d'un réseau d'électricité par des utilisateurs du réseau et/ou des dispositifs d'alimentation du réseau au niveau d'un nœud de réseau d'un utilisateur et/ou dispositif d'alimentation de référence sans nécessiter de commande de réseau centrale ou régionale, dans lequel

a) des appareils de mesure sont disposés au nœud de réseau respectif (3, 4) pour détecter les données d'état de réseau actuelles (27), la tension ou la tension et la fréquence,

b) en tant qu'appareil de mesure, un appareil destiné à une « mesure de données d'état de réseau avec horloge » (6) est présent pour sortir les données d'état de réseau (27) destinées à un établissement cadencé d'un coefficient de stabilité (29) en tant que grandeur caractéristique d'un écart de valeur de consigne (28),

c) une logique d'évaluation d'état de réseau (10) est placée en aval des appareils de mesure pour établir des écarts de valeur de consigne (28) des données d'état de réseau (27) par rapport à une valeur de consigne (31) prédéfinie et pour évaluer les écarts de valeur de consigne (28) sous la forme du coefficient de stabilité (29),

d) un compteur d'électricité (22) est placé en aval d'un nœud de réseau central (3) d'une unité économique locale (48) pour établir la quantité d'électricité prélevée ou alimentée,

e) un calculateur est placé en aval du compteur d'électricité pour « l'établissement d'unités de quantité et de valeur » (23) et pour la pondération de la quantité d'électricité établie avec le coefficient de stabilité cadencé (29) afin d'établir des unités de valeur temporaires (39) WKN,

f) une mémoire de sommes de facturation (24) pour la sommation et le stockage des unités de valeur temporaires (39) WKN sous la forme d'une somme de valeur de période de facturation (49) est placée en aval,

**caractérisé en ce que**

g) une unité de commande de convertisseur (11) est présente en tant qu'unité de commande pour exploiter des convertisseurs locaux (18, 19, 20) sur des appareils de consommateurs de courant pour des installations d'approvisionnement et/ou d'alimentation électrique en vue d'une alimentation en fonction du coefficient de stabilité (29).

2. Agencement permettant de convertir et de stabiliser des données d'un réseau d'électricité par des utilisateurs du réseau et/ou des dispositifs d'alimentation du réseau au niveau d'un nœud de réseau d'un utilisateur et/ou dispositif d'alimentation de référence sans nécessiter de commande de réseau centrale ou régionale, **caractérisé en ce que**

a) des appareils de mesure sont disposés au nœud de réseau respectif (3, 4) pour détecter les données d'état de réseau actuelles (27), la fréquence et la tension,

b) en tant qu'appareil de mesure, un appareil destiné à une « mesure de données d'état de réseau avec horloge » (6) est présent pour sortir les données d'état de réseau (27) destinées à un établissement cadencé d'un coefficient de stabilité (29) en tant que grandeur caractéristique d'un écart de valeur de consigne (28),

c) une logique d'évaluation d'état de réseau (10) est placée en aval des appareils de mesure pour établir des écarts de valeur de consigne (28) des données d'état de réseau (27) par rapport à une valeur de consigne (31) prédéfinie et pour évaluer les écarts de valeur de consigne (28) sous la forme du coefficient de stabilité (29),

d) un compteur d'électricité (22) est placé en aval d'un nœud de réseau central (3) d'une unité économique locale (48) pour établir la quantité d'électricité prélevée ou alimentée,

e) un calculateur est placé en aval du compteur d'électricité (22) pour « l'établissement d'unités de quantité et de valeur » (23) et pour la pondération de la quantité d'électricité établie avec le coefficient de stabilité cadencé (29) afin d'établir des unités de valeur temporaires (39) WKN,

f) une mémoire de sommes de facturation (24) pour la sommation et le stockage des unités de valeur temporaires (39) WKN sous la forme d'une somme de valeur de période de facturation (49) est placée en aval.

Figur

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1339155 B1
- WO 2013017896 A2
- US 20120179631 A1
- US 2011270453 A1
- US 2010076835 A1
- US 2010218006 A1
- US 20110231028 A1